Europäisches Patentamt

European Patent Office

Office européen des brevets

(11) Publication number: **0 465 752 A1**

# EUROPEAN PATENT APPLICATION

(21) Application number: **90500112.9**

(22) Date of filing: **03.12.90**

(51) Int. Cl.5: **F16H 47/04**

(30) Priority: **20.06.90 ES 9001713**

(43) Date of publication of application:
**15.01.92 Bulletin 92/03**

(84) Designated Contracting States:
**AT BE CH DE DK FR GB GR IT LI LU NL SE**

(71) Applicant: **ARAGONESA DE EQUIPAMIENTOS PARA AUTOMOVILES, S.A.**
**Ctra. de Madrid, Km. 315.8**
**E-50012 Zaragoza(ES)**

(72) Inventor: **Parraga Garcia, Julián**
**c/ Agustin Querol No. 8, nr. 5 Dcha.**
**E-28014 Madrid(ES)**

(74) Representative: **Gomez-Acebo y Pombo, José Miguel**
**c/o CLARKE, MODET & Co. Paseo de la Castellana 164**
**E-28046 Madrid(ES)**

(54) Continuous gear change mechanism.

(57) Continous gear change mechanism, comprising an input shaft (11), output shaft (12), interlocking cogged wheels, an hydrostatic transmission (3) and an epicycloidal gear (1). The hydrostatic transmission comprises an hydraulic pump (5) and motor (6), whereby at least one component ties-up with one of the epicycloidal gear components. Another two components of this epicycloidal gear are linked with separate, coaxial tracks of the input shaft. At least the pump is of variable flow and reversible.

FIG. 1

This invention refers to a continuous gear change mechanism for thermal engine vehicles, which can be adapted to suit farm, industrial and transport vehicles, cars, etc.

The gear change mechanism detailed in this invention is of the type which comprises separate input and output shafts, onto which interlocking pinions and cogged wheels are mounted.

At present, gear change mechanisms used in all vehicles (industrial, farming, cars, etc.) are of the discontinous type, i.e. they have a specific number of transmission ratios, by way of which the vehicle in question travels at a speed proportional to the turning rate of its engine. In consequence, the speed of the vehicle is restricted within the maximum margins allowed for by the engine. Therefore, when it is necessary to increase speed, the gear immediately higher than that currently in use is selected.

Gear change mechanisms in use today, fall within two basic operational types: constant intake and planetary gear.

The former type is more commonly used. It consists basically of three main shafts (input, intermediate and output), with a pair of interlocking cogged wheels (constant intake) situated on the input and intermediate shafts, and a series of interlocking cogged wheel pairs situated on the intermediate and output shafts, each pair corresponding to a specific gear or speed.

Gear change mechanisms with planetary or epicycloidal gears are more ideally suited to automatic gear boxes, whereby a gear change operation is carried out automatically, i.e. without any action on the part of the driver. However, these mechanisms are also discontinuous.

In both cases, power transmission is completely mechanical, i.e. via interlocking cogged wheels with the appropriate interlocking facility.

The Dutch manufacturer of "DAF" vehicles has used a continous gear change mechanism in medium sized saloon cars (DAF-44). This consisted of a special transmission belt situated between two pullies, which provided for continuous variation with respect to radii. This variation was achieved by way of the coming together or moving apart of the two tronconical plates making up each pulley.

Attempts have been made to perfect this type of gear change mechanism, however, to-date a commercially feasible device has not been manufactured

Continuous gear change mechanisms show a clear advancement due to their obvious advantages: lower fuel consumption, lower pollution levels, greater acceleration capacity, longer useful life of the vehicle engine, etc.

The aim of this invention is to produce a continuous gear change mechanism comprising a connection between a variable flow hydrostatic transmission and a conventional mechanical transmission gear mechanism, in such a way that the maximum level of output passing through the hydrostatic transmission is always slightly lower than the level of power produced by the engine of the vehicle.

The gear change mechanism described in this invention is distinguished by the fact that it includes a continuity and power shunt module comprising an hydrostatic transmission and an epicycloidal gear, together with the range of gears making up a conventional mechanical transmission.

The hydrostatic transmission comprises a pump and an hydraulic motor, the pump at least being of variable flow and reversible, with a no delivery position.

The mentioned pump and hydraulic motor tie-in with two of the components of the epicycloidal gear, one of these components and a third component of the epicycloidal gear being linked to separate coaxial stretches of the input shaft.

The gear change mechanism described in this invention provides for numerous advantages when compared to traditional mechanisms, for example:

a) It has a variety of hydrostatic and power shunt modules, which share the same general scope, power shunt and capacity characteristics.

b) The possibility exists to incorporate the clutch facility to said modules, by means of the elimination of hydraulic pressure from the hydrostatic circuit or by activating the by-pass valve or device. As described above, the discharge speed of the hydraulic motor will ideally be null.

c) The possibility exists to create mechanical, hydraulic, electrical or mixed linkage between the clutch pedal and the hydraulic pressure restriction valves and/or with a by-pass valve or device.

d) The possibility exists to incorporate appropriate devices to ensure that vehicle speed changes are achieved via the accelerator pedal, whilst the turning rate of the thermal engine remains constant for a specific speed range This equates to pressing on the accelerator pedal in order that the flow variation lever of the hydraulic pump changes position in the appropriate manner.

e) The possibility exists to assemble the hydraulic motor and pump either separately or within the same frame. In the latter case, the hydraulic circuits and related components will be streamlined to a great degree.

f) The possibility exists for the hydraulic motor and pump to be reversible, i.e. both can absorb mechanical power and release it as hydraulic power, or vice versa.

The hydraulic motor should ideally turn in both directions, within predetermined limits with respect to number of revolutions per minute, which correspond to the hydraulic power output levels. It is possible for the motor to turn in the same direction in the case of both maximum and minimum turning rates, however, the final output levels will not be the same. In the case of the variable flow hydraulic pump, the final flow will ideally run in the opposite direction to that of the oil within its appropriate circuit, however, it is possible to use an hydraulic pump whereby the final flow corresponds in direction to that of the oil movement.

In accordance with one operational feature, the input shaft of the gear mechanism is divided into two separate, aligned tracks, one of which (propelling) can be connected to the thermal engine, and the other being known as propelled. The propelling track is an integral part of one of the epicycloidal gear components and the propelled track is an integral part of another of its components.

The input shaft can also be made up from three separate coaxial tracks; an internal track which is an integral part of the crown gear of the epicycloidal gear and activates the hydrostatic transmission pump, an intermediate track which is part of the sun gear and is activated by the hydraulic motor, and an external track which is an integral part of the planetary member holder and has cogged wheels which interlock with the wheels and/or pinions of the output shaft.

According to a second operational feature, at the end of the output shaft which is adjacent to the outlet, there is a planetary gear. This output shaft can also have three intermediate planetary gears and an output gear which provides for the reverse gear function.

In this latter case, an additional sliding sleeve can be included in order to avoid the very high turning speeds which would arisein the sun gears of the planetary gears during the gear selection process.

It is not uncessary for the planetary gears mounted on the output shaft to have crown gears, the sun gear shaft of the different gears having a disk brake for speed range selection. There is a sleeve at the front of the output shaft by means of which reverse gear is provided for.

The characteristics of the invention as detailed in the patent claims are described below in greater detail, making reference to the attached drawings in which a non-restrictive selection of operational features is shown.

Figure 1 is a skeleton diametric section of a gear change mechanism built in accordance with this invention, which includes a conventional 3 x 3 gear box.

Figure 2 shows the kinematics relating to the performance of a vehicle using the gear change box shown in figure 1.

Figure 3 is a sectional view as in figure 1, showing a 3 x 2 version which includes a planetary gear at the output shaft to allow for reduced and normal rates of speed.

Figure 4 is a close up view of a modified planetary gear of the output shaft shown in figure 3, which allows for reduced and normal rates of speed to be obtained.

Figure 5 is a sectional view as in figure 3, showing a continuous gear change mechanism with six transmission ratios.

Figure 6 is a skeleton section of a streamlined version of the mechanism shown in figure 5.

Figure 7 is a simplified diametric section of an eight speed device, similar to figure 6.

Figure 8 is a skeleton section of a 3 x 2 version with planetary gears but no crown gears.

Figure 9 shows, in graph form, the kinematics of the continuous gear change mechanism when installed in a vehicle.

Figures 10 to 21 show various possibilities with respect to the continuity and power shunt hydraulic module.

Figure 22 is a diagram showing the performance values of the gear box described in this invention.

Figure 23 is a diagram showing, in percentage terms, the deviation of power corresponding to each value of the operational scope. The deviation corresponds to the maximum value.

Figure 24 is a skeleton section of a gear box using the module shown in figure 10.

Figures 25 to 28 show the kinematics relating to different versions of the gear change mechanism.

Figures 29 and 30 are diametric sections of two further continuous gear boxes.

Figures 31 and 32 show two plate versions for the manual speed range selection stick.

In the description of the various figures, the same reference numbers will be used to identify components or parts which appear on more than one occasion.

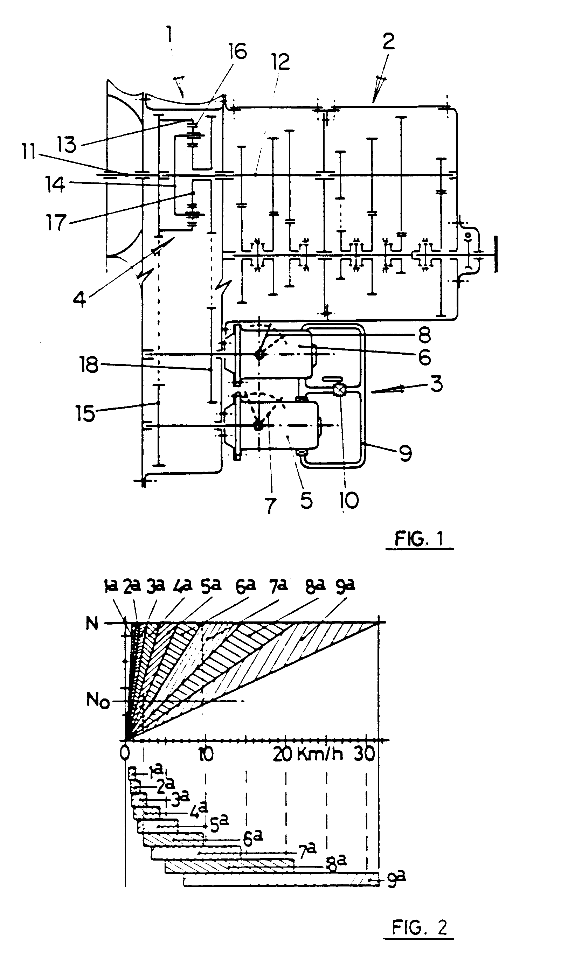

Figure 1 shows a device which has a continuity and power shunt module (ref. 1) on a conventional 3 x 3 gear change mechanism (ref. 2).

The continuity and power shunt module comprises a hydrostatic transmission (ref. 3) and an epicycloidal gear (ref. 4). The hydrostatic transmission consists of a variable flow hydraulic pump (5), ideally having axial pistons, and an hydraulic motor (6), also having axial pistons. Both the pump and the hydraulic motor are reversible, i.e. the pump can act as a pump or as a motor, and the motor can act an an hydraulic motor or as a pump.

The pump (5) has a flow variation lever (7) by means of which the direction in which the hydraulic motor turns can be regulated so that it is the same or opposite to that of the pump. Therefore, the lever (7) moves between the extreme positions (shown as a dotted line) passing through an intermediate position which corresponds to that of no-delivery (shown as a continuous line).

The hydraulic motor (6) also has a flow variation lever (8) which can take up any intermediate position between the two extreme points which correspond to maximum and minimum flow levels. The motor is reversible, i.e. it also functions as an hydraulic pump.

The hydraulic circuit (9) between the pump (5) and the motor (6), has a by-pass valve (10) and an appropriate number of pressure restriction valves; in order to simplify the diagram, certain components have been omitted, e.g. oil tank, filters, heat interchanger, etc.

In figure 1, the gear box input shaft is subdivided into two separated, alignend tracks, one being propelling (ref. 11) which is connectable to the termal engine shaft, and the other propelled (12). The propelling track is an integral part of the crown gear (13) of the epicycloidal gear. The propelled track is an integral part of the planetary member holder (14) of said gear. The crown gear (13) has two gears, one interlocking with a cogged wheel (15) which forms part of the pump (5) shaft, and the other interlocking with the planetary members (16) of the epicycloidal gear. The sun gear (17) of this gear also has two cogged wheels, one interlocking with a wheel (18) which forms a part of the hydraulic motor (6) shaft, and the other interlocking with the planetary members (16).

The input shaft (11) activates the pump (5) through the crown gear (13), and the pump (5) activates the motor (6), the shaft of the latter interlocking with the sun gear of the epicycloidal gear via the cogged wheel (18). The planetary member holder (14) plate starts to function, this being an integral part of the track (12) which corresponds to the set of gears of a conventional gear change mechanism.

To obtain each speed range which can be selected by means of the gear box (2), the lever (7) of the pump (5) moves between its extreme positions, allowing for variation of the flow and for turning of the engine at different speeds and in different directions, given that the lever, when moving between the extreme positions, passes through an intermediate point which corresponds to a no-delivery point. By means of this engine flow variation lever (8), variations in the turning speed can be obtained.

The diagram shown in figure 2, indicates vehicle performance in the case of a gear box as shown in figure 1. Revolutions per minute of the thermal engine of the vehicle are shown in offset form and the speed of the vehicle in kilometres per hour is shown in bar form.

From this graph it can be observed that at each speed there is a continuous and total variation of transmission ratios, this being shown by the lines passing through the coordinate starting point. N and No indicate the maximum duty and breakdown torque rating of a thermal engine of a vehicle The lower section of this graph shows the maximum/minimum speed intervals of the vehicle, corresponding to each selected speed range. As is normal, the minimum value has been defined in accordance with the No rating, in order to obtain a stable rate of speed.

Figures 1 and 2 show the operational layout and kinematics of a continuous gear change mechanism, installed in a vehicle with largely low speed requirements (farm tractor, public works machinery, etc.).

In figure 1, the hydraulic transmission (3) is in a lower position than would normally be the case.

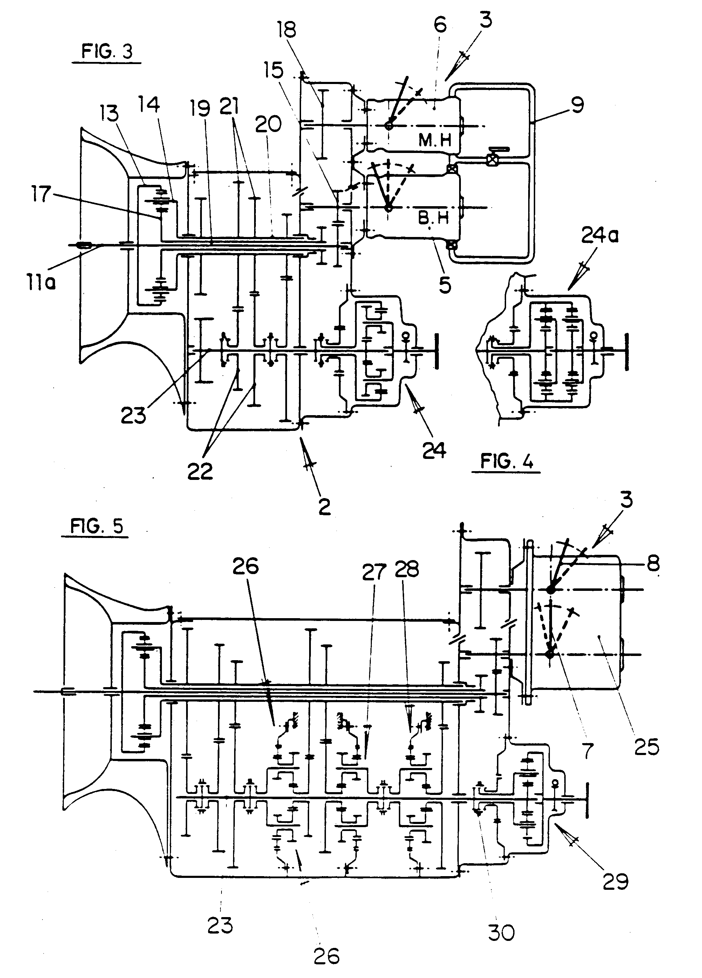

Figure 3 shows a continuous 3 x 2 gear change mechanism with hydraulic transmission equipment, identical to that as described in figure 1. In this example, the input shaft consists of three separate, coaxial tracks; an internal track (ref. 11a) which is an integral part of the crown gear (13) of the epicycloidal gear and activates the pump (5) of the hydraulic transmission; an intermediate track (ref.19) which is an integral part of the sun gear (17) and is activated by the hydraulic motor (6) via the appropriate cogged wheels; and an external track (20) which is an integral part of the planetary member holder (14) and has cogged wheels which interlock with the wheels and/or pistons (22) of the output shaft (23). In this case, the hydraulic pump is activated by the input shaft, i.e. by the thermal engine of the vehicle. The hydraulic motor causes the sun gear of the planetary gear to start turning. The planetary gear (24), installed at the back of the output shaft (23), acts in such a way that it allows for reduced and normal rates of speed. A possible alternative (24a) is shown in figure 4, this allowing for reduced and normal speeds. As before, the hydraulic transmission of the hydraulic motor, is in a lower position than would normally be the case.

In figures 1 and 3 and subsequent diagrams, the constitution and operational characteristics of the device (2) which is appropriate to conventional gear boxes, is not described.

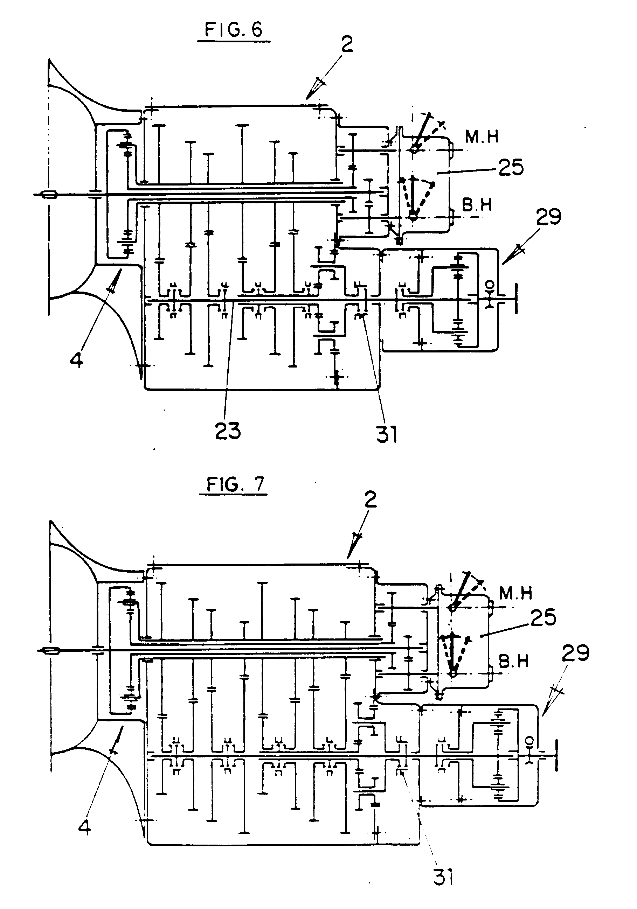

Figure 5 shows a continuous gear change mechanism with six transmission ratios. The hydrostatic transmission (3), together with the hydraulic pump and motor are contained within the same frame (25). There are three planetary gears (26, 27 and 28) located at the output shaft, which obtain higher transmission ratios, or short speeds. The planetary gear (29) situated at the outlet of the shaft (23), has the function of reverse gear, the appropriate sliding sleeve (30) being present. All other details of figure 5 are the same as those shown in figure 3.

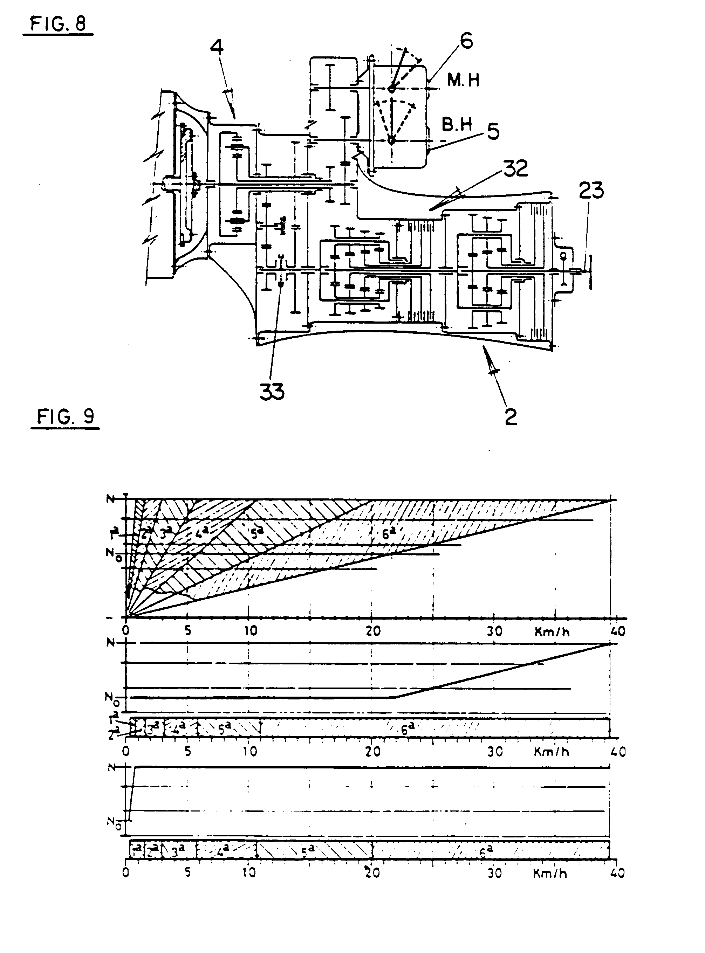

Figure 6 is a streamlined version of figure 5, in which an additional sliding sleeve (31) has been included to avoid the very high rates of turning speed that would arise in the sun gear of the planetary gear mounted on the output shaft (23), when long gears are selected. The example shown in figure 7 is that of an eight speed version and is similar to that shown in figure 6, whilst the input shafts, its coaxial tracks with the epicycloidal gear and the pump, and its engine connections are as described in figure 3.

Figure 8 is a skeleton view of a 3 x 2 version with planetary gears but no crown gears at the output shaft (23). Therefore, this version includes the appropriate disk brakes (32) for gear selection. This gear box can be easily converted to automatic mode, and its hydraulic motor (6) is that of a fixed flow model (it is only necessary for a hydraulic motor with variable cylinder capacity to be present where the clutch facility is incorporated within the hydrostatic transmission; this is not the case in figure 8, since said disk brakes (32) make it unnecessary for there to be a clutch facility. Reverse gear is obtained by way of a sliding sleeve (33) which is located at the front of the output shaft (23).

The graph in figure 9 shows the kinematics of the continuous gear change mechanism described in this invention. The central and lower sections of this graph show the speed range intervals in the case of minimum consumption and maximum output, respectively, whereas the offset, bar and other values are as shown in figure 2.

All foregoing examples are more suitable for low speed vehicles such as farm tractors, public works machinery, etc., however, this does not restrict their use to these vehicles once certain modification have been made.

Once the hydraulic pump has been activated by a component of the planetary gear which is connected to the thermal engine as described above, there is an option to connect the former directly to this via an appropriate mechanism.

The hydraulic motor lever, whilst in variable cylinder mode, can be connected to the clutch pedal in order that the hydrostatic transmission act as a conventional clutch facility. Alternatively, it could activate both the hydraulic pump and motor cylinder capacity variation levers (appropriately connected to the clutch and accelerator pedals).

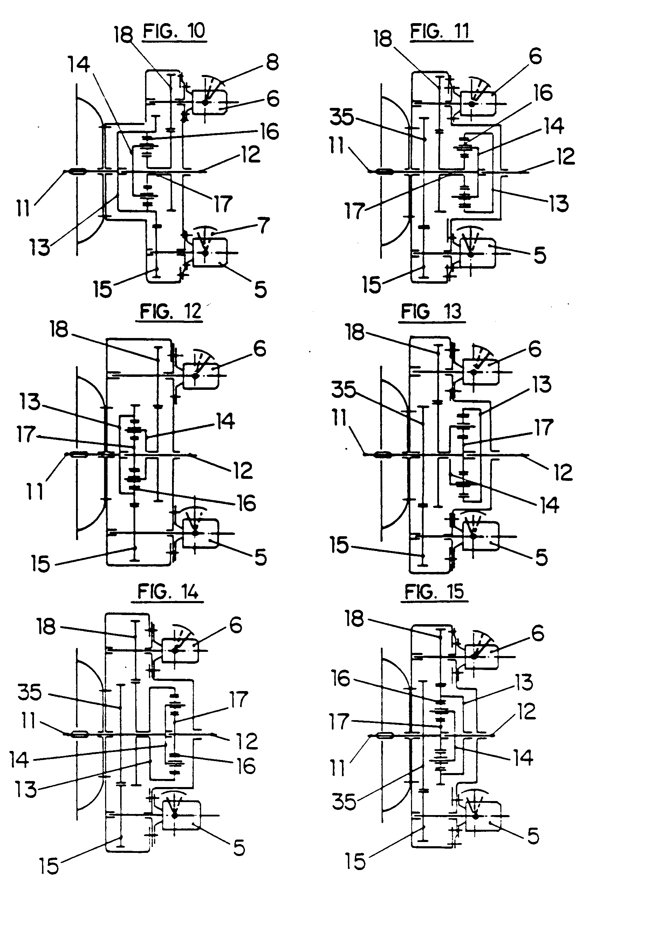

Figures 10 to 21 show different operational possibilities with respect to the hydrostatic continuity and power shunt module. All figures use the same reference numbers to illustrate components which appear on more than one occasion.

In figure 10 the propelling track of the input shaft in an integral part of the crown gear (13) of the epicycloidal gear, whilst the propelled track (12) is an integral part of the planetary member holder (14) of this gear. The crown gear (13) includes two gears, one which interlocks with a cogged wheel (15) which is an integral part of the pump shaft and another which interlocks with the planetary gears (16). The sun gear (17) also has two cogged wheels, one which interlocks with a a wheel (18) which is an integral part of the hydraulic motor shaft and another which interlocks with the planetary members (16).

In figure 11, the propelling track (11) of the input shaft is an integral part of the planetary member holders (14) and the propelled track is an integral part of the crown gear (13). The propelling track (11) has a cogged wheel (25) which interlocks with the cogged wheel (15) which is part of the pump shaft. The sun gear (17) has two gears, one of which interlocks with the cogged wheel (19) which is an integral part of the hydraulic motor shaft and the other which interlocks with the planetary members.

In the case of figure 12, the propelling track (11) of the input shaft is an integral part of the crown gear (13) of the epicycloidal gear and the propelled track (12) is an integral part of the sun gear (17). The crown gear (13) includes two gears, one which interlocks with a cogged wheel (15) which is part of the hydraulic pump shaft, and the other which interlocks with the planetary members (16). The planetary member holder (14) has a gear which interlocks with the cogged wheel (18) which is part of the hydraulic motor shaft.

In the case of figure 13, the propelling track (11) of the input shaft is an integral part of the sun gear (17) of the epicycloidal gear and the propelled track (12) is an integral part of the crown gear (13). The propelling track (11) of the input shaft carries a cogged wheel (35) which interlocks with the hydraulic pump shaft. The planetary member holder (14) has a cogged wheel which interlocks with a wheel (18) which is part of the hydraulic motor.

In the case of figure 14, the propelling track (11) of the input shaft is an integral part of the planetary member holder (14) of the epicycloidal gear and the propelled track is an integral part of the sun gear. The propelling track (11) includes a cogged wheel (35) which interlocks with the cogged wheel (15) which is an integral part of the pump shaft. The sun gear (13) of the epicycloidal gear has two cogged wheels, one which interlocks with the cogged wheel (18) which is part of the hydraulic motor shaft and another which interlocks with the planetary members (16).

In figure 15, the propelling track (11) of the input shaft is an integral part of, the sun gear (17) and the propelled track (12) is an integral part of the planetary member holder (14) of the epicycloidal gear. The propelling gear has a cogged wheel (35) which interlocks with the cogged wheel (15) which is an integral part of the hydraulic pump shaft. The sun gear (13) has two cogged wheels, one which interlocks with the cogged wheel (18) which is an integral part of the hydraulic motor and another which interlocks with the planetary members (16).

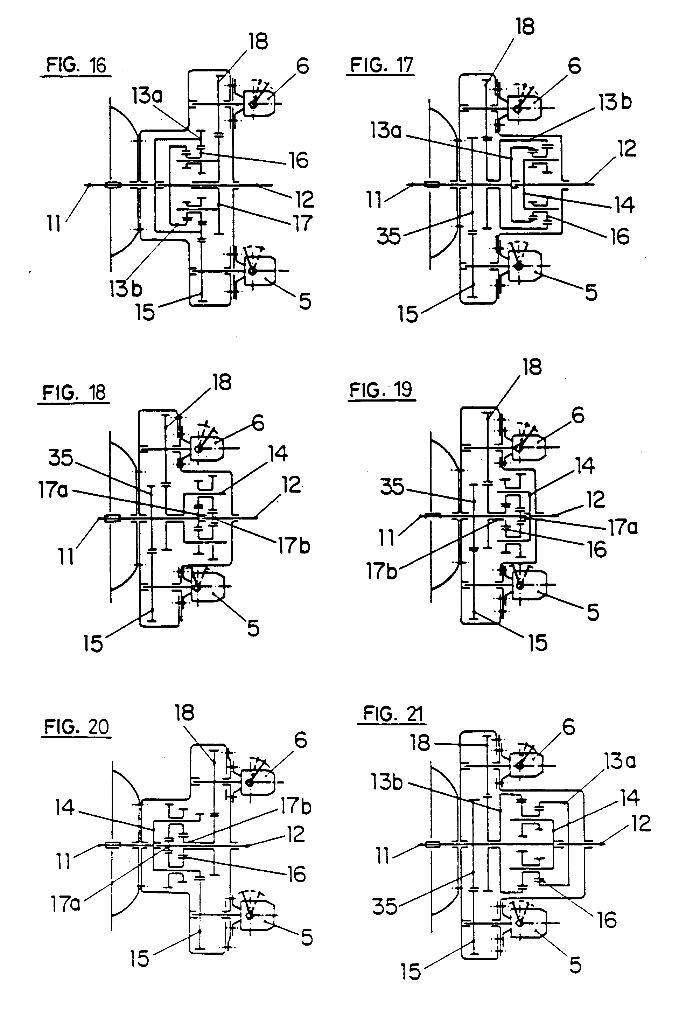

In figure 16, the propelling track (11) of the input shaft is an integral part of the first crown gear (11a) of the epicycloidal gear, and the propelled track (12) is an integrl part of a second crown gear (13b) of the same gear. The crown gear (13a) has two gears, one which interlocks with the cogged wheel (15) which is an integral part of the pump and another which interlocks with the double planetary members (16). The planetary member holder (17) has a cogged wheel which interlocks with a wheel (18) which is part of the hydraulic motor.

In figure 17, the propelling track of the input shaft is an integral part of a crown gear (13a) of the epicycloidal gear and the propelled track (12) is an integral part of the planetary member holder (14). The input track has a cogged wheel (25) which interlocks with the cogged wheel (15) which is an integral part of the pump shaft. The epicycloidal gear has a second crown gear (13b) which has two cogged wheel, one of which interlocks with the cogged wheel (18) which is an integral part of the hydraulic motor and another which interlocks with double planetary members, as in the case of the previous figure.

In figure 18, the propelling track of the input shaft is an integral part of the first sun gear (17a), whilst the propelled track is an integral part of a second sun gear (17b). The propelling track has a cogged wheel (35) which interlocks with the cogged wheel (15) of the pump shaft. The planetary member holder (14) has a cogged wheel which interlocks with the wheel (18) which is an integral part of the hydraulic motor shaft.

In figure 19, the propelling track (11) of the input shaft is an integral part of the first sun gear (17a) of the epicycloidal gear and the propelled track (12) is an integral part of the planetary member holder (14). The propelling track (11) has a cogged wheel (35) which interlocks with the cogged wheel (15) which is an integral part of the pump (5) shaft. There is a second sun gear (17b) which has two cogged wheels, one of which interlocks with the cogged wheel (18) which is an integral part of the hydraulic motor (6) shaft and another which interlocks with the planetary members (16).

In figure 20, the propelling track (11) of the input shaft, is an integral part of the planetary member holder (14) of the epicycloidal gear, whilst the propelled track (12) is an integral part of a first sun gear (17a). The planetary member holder (14) includes a cogged wheel which interlocks with the wheel (15) which is an integral part of the hydraulic pump (5). The second sun gear (17b) has two cogged wheels, one of which interlocks with the double planetary member holder (16) and the other interlocking with a cogged wheel (18) which is part of the hydraulic motor (6).

Finally, in figure 21, the input shaft (11) is an integral part of the planetary member holder (14) of the epicycloidal gear and the propelled track (12) is an integral part of a crown gear (13a). The propelling track (11) has a wheel (35) which interlocks with the cogged wheel (15) which is part of the pump shaft. There is a second crown gear (13b) which has two cogged wheels, one which interlocks with the cogged wheel (18) which is part of the engine (6) shaft and another which interlocks with the double planetary members (16).

The common, basic characteristic of the examples shown in figures 10 to 21, is that they all adhere to the same formula with respect to the following capacities:

C = Operational scope (ratio between maximum and minimum output speed, for a stable input shaft speed).

R = Performance of the continuous gear box which incorporates some of the modules shown in these figures.

D = Deviation of power, or power deviated through the hydrostatic transmission which arises from the power produced by the thermal engine of the vehicle.

Rh = Performance of the hydrostatic transmission - current motor and hydraulic pump equipment have performance rates of approximately 80%.

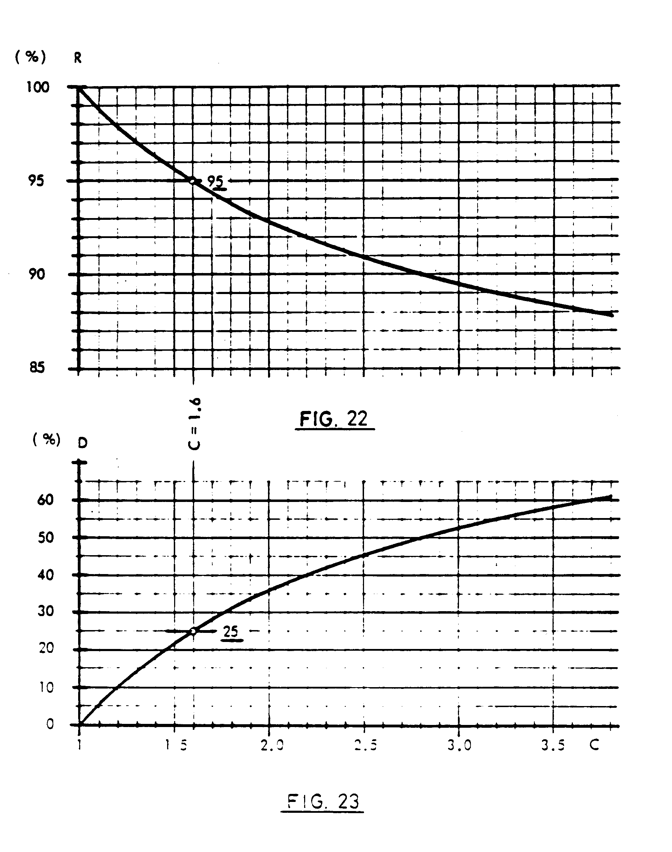

Figure 22 shows the performance values (R) in percentage terms, with respect to operational scope (C). Figure 23 shows the percentage values of D corresponding to each operational scope value (C). In the case of both graphs, the values corresponding to 95% and 25%, for R and D respectively, have been marked, where C = 1.6.

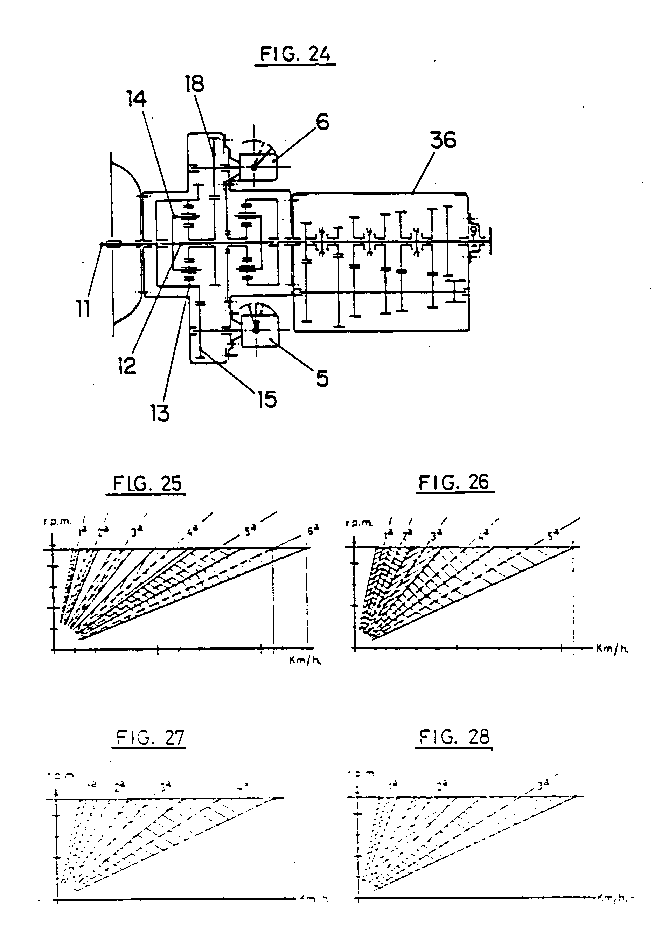

Figure 24 shows a continous gear box which can be achieved by incorporating a module as shown in figure 10 to a conventional gear box (36) with six transmission ratios The same reference numbers as used in figure 10 are used in this figure.

Figure 25 shows the kinematics of a continuous gear box as shown in figure 24, where the conventional gear box has six transmission ratios and nonuniform graduations, the lowest ratio corresponding to the fifth-sixth gear change operation. Figures 26, 27 and 28 show in graph form how to obtain the same speed scope as in the case of a conventional gear box with six ratios, by using conventional gear boxes of 5, 4 and 3 speeds respectively; the first-second change is discontinuous in figure 28, these discontinuities or jumping are of a noticeably lower level to the ratio of turning rates of the thermal engine of a vehicle with maximum power and maximum torque.

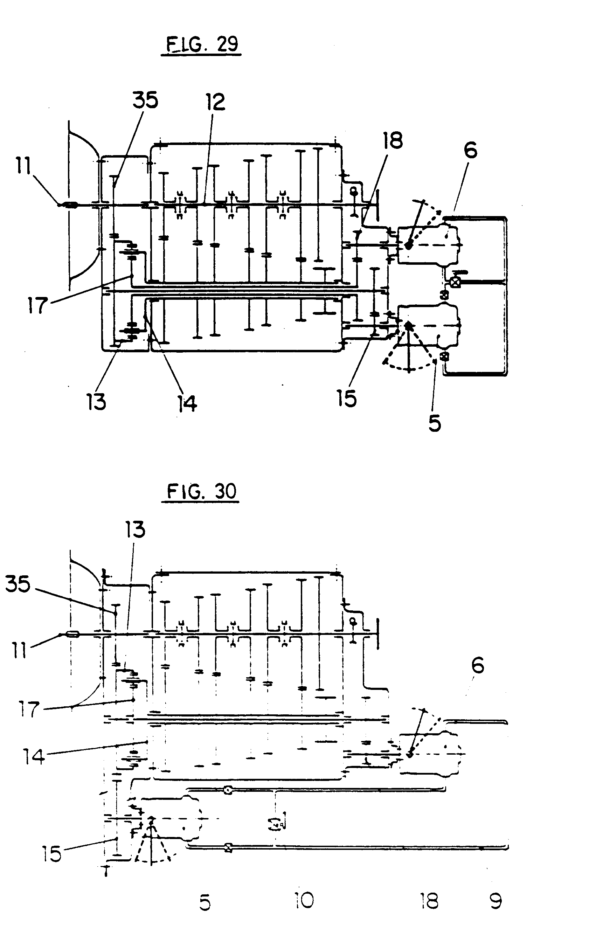

Figure 29 shows the integration of the hydrostatic module for power shunt and continuity facilities, whereby a continous gear box is obtained with very high performance levels and six speed ranges, which can be used for industrial vehicles.

Figure 30 is a skeleton view of the integration of said module in a six speed range gear box, which can be used an in the previous figure.

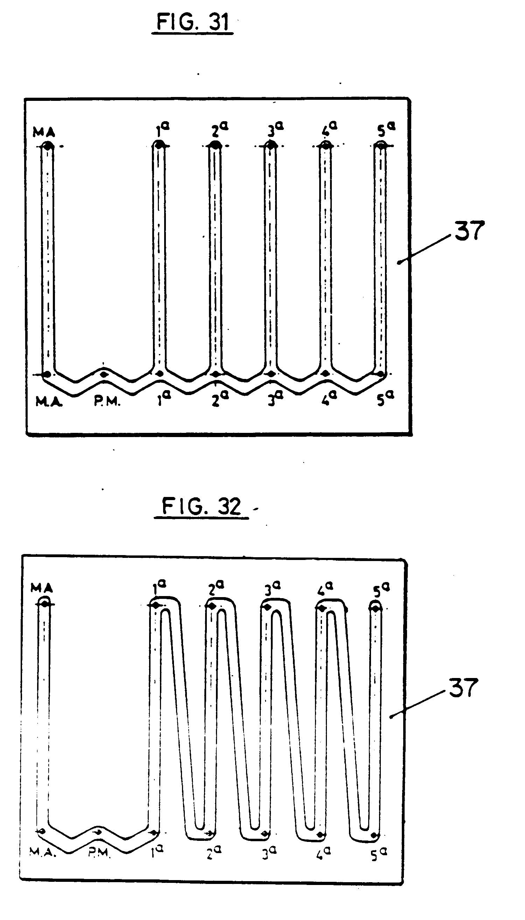

Lastly, figures 31 and 32 correspond to two plate (37) possibilities with respect to the manual speed range selection lever, maximum speed ranges being situated at the upper part and lower speed ranges at the bottom.

## Claims

1. Continuous gear box, which includes an input shaft, an output shaft and interlocking cogged wheels, distinguished by the fact that it includes the combination of hydraulic transmission and epicycloidal gear. The hydraulic transmission comprises a pump and an hydraulic motor, at least one component linking with one of the epicycloidal gear components. Two of the epicycloidal gear components tie-up with separate, coaxial tracks of the input shaft and at least the pump is of variable flow and reversible, with a no delivery position.

2. Gear box as in patent claim 1, distinguished by the fact that the input shaft is divided into two separate, aligned tracks, one propelling which can be connected to the output shaft of the thermal engine and is an integral part of one of the epicycloidal gear components and one propelled which is an integral part of another of the components of said gear.

3. Gear box as in patent claim 2, distinguished by the fact that the propelling track of the input shaft is an integral part of the crown gear of the epicycloidal gear, and the propelled track is an integral part of the planetary member holder of this gear. The crown gear has two gears, one which interlocks with a cogged wheel which is as integral part of the pump shaft, and the other interlocking with the planetary members. The sun gear has two cogged wheels, one which interlocks with a wheel which is an integral part of the hydraulic motor and the other which interlocks with the planetary members.

4. Gear box as in patent claim 2, distinguished by the fact that the propelling track of the input shaft is an integral part of the planetary member holder and the propelled track is an integral part of the crown gear. Said propelling track has a cogged wheel which interlocks with a second cogged wheel which is an integral part of the pump shaft. The sun gear has two gears, one which interlocks with a cogged wheel which is part of the hydraulic motor and another which interlocks with the planetary members.

5. Gear box as in patent claim 2, distinguished by the fact that the propelling track of the input shaft is an integral part of the crown gear of the epicycloidal gear and the propelled track is an integral part of the crown gear. This crown gear has two gears, one which interlocks with a cogged wheel which is an integral part of the hydraulic pump shaft and another which interlocks with the planetary members, the planetary member holder having a gear which interlocks with a cogged wheel which is an integral part of the hydraulic motor shaft.

6. Gear box as in patent claim 2, distinguished by the fact that the propelling track of the input shaft is an integral part of the sun gear of the epicycloidal gea and the propelled track is an integral part of the crown gear. This propelling track has a cogged wheel which interlocks with a second cogged wheel, this latter being an integral part of the hydraulic pump shaft. The planetary member holder has a cogged wheel which interlocks with a wheel which is part of the hydraulic motor.

7. Gear box as in patent claim 2, distinguished by the fact that the propelling track of the input shaft is an integral part of the planetary member holder of the epicycloidal gear and the propelled track is part of the sun gear. This propelling track has a cogged wheel which interlocks with a second cogged wheel which is part of the pump shaft. The crown gear has two cogged wheels, one which interlocks with a cogged wheel which is an integral part of the hydraulic motor shaft and another which interlocks with the planetary members.

8. Gear box as in patent claim 2, distinguished by the fact that the propelling of the input shaft is an integral part of the sun gear and the propelled track is an integral part of the planetary member holder of the epicycloidal gear. This propelling track has a cogged wheel which interlocks with a second cogged wheel which is part of the hydraulic pump shaft. The crown gear has two cogged wheels, one of which interlocks with a cogged wheel which is part of the hydraulic motor and the other with the planetary members.

9. Gear box as in patent claim 2, distinguished by the fact that the propelling track of the input shaft is an integral part of a first crown gear of the epicycloidal gear and the propelled track is an integral part of a second crown gear. The first crown gear has two gears, one which interlocks with a cogged wheel which is an integral part of the pump shaft and another which interlocks with double planetary members, the planetary member holder having a cogged wheel which interlocks with a wheel which is an integral part of the hydraulic motor.

10. Gear box as in patent claim 2, distinguished by the fact that the propelling track of the input shaft is an integral part of a first crown gear of the epicycloidal gear and the propelled track is an integral part of the planetary member holder. The input track has a cogged wheel which interlocks with a second cogged wheel which is a part of the pump shaft. The second crown gear has two cogged wheels, one which interlocks with a cogged wheel which is an integral part of the hydraulic motor and another which interlocks with double planetary members.

11. Gear box as in patent claim 2, distinguished by the fact that the propelling track of the input shaft is an integral part of a first sun gear of the epicycloidal gear and the propelled track is an integral part of a second sun gear. This propelling track has a cogged wheel which interlocks with a second cogged wheel which is an integral part of the pump shaft. The planetary member holder has a cogged wheel which interlocks with a wheel which is a part of the hydraulic motor shaft.

12. Gear box as in patent claim 1, distinguished by the fact that the propelling track of the input shaft is an integral part of a first sun gear of the epicycloidal gear and the propelled track is an integral part of the planetary member holder. This propelling track has a cogged wheel which interlocks with a second cogged wheel which is part of the pump shaft. There is a second sun gear with two cogged wheels, one interlocking with a cogged wheel of the hydraulic motor shaft and another interlocking with the planetary members.

13. Gear box as in patent claim 2, distinguished by the fact that the propelling track of the input shaft is an integral part of the planetary member holder of the epicycloidal gear and the propelled track is an integral part of the sun gear. The planetary member holder includes a cogged wheel which interlocks which a wheel which is part of the hydraulic motor shaft. The other sun gear has two cogged wheels, one of which interlocks with the double planetary members and the the other with a cogged wheel which, in turn, interlocks with another which is an integral part of the hydraulic motor shaft.

14. Gear box as in patent claim 2, distinguished by the fact that the propelling track of the input shaft is an integral part of the planetary member holder of the epicycloidal gear and the propelled track is an integral part of the crown gear. This propelling track has a cogged wheel which interlocks with a second cogged wheel which is part of the pump shaft. The other crown gear has two cogged wheels, one which interlocks with a cogged wheel which is an integral part of the motor shaft and the other interlocking with the planetary members.

15. Gear box as in patent claim 1, distinguished by the fact that the input shaft has three separate, coaxial tracks; one internal which is part of the crown gear of the epicycloidal gear and activates the pump of the hydrostatic transmission, one intermediate which is an integral part of the sun gear and is activated by the hydraulic motor, and one external which is part of the planetary member holder and has cogged wheels which interlock with the cogged wheels of the output shaft.

16. Gear box as in patent claim 15, distinguished by the fact that at the outlet of the output shaft there is a planetary gear (reverse gear).

17. Gear box as in patent claim 15, distinguished by the fact that the output shaft has at least two planetary gears for speed reduction.

18. Gear box as in patent claim 15, distinguished by the fact that the output shaft includes a planetary gear with a sliding sleeve located between the output shaft and the planetary member holder of said planetary gear.

**19.** Gear box as in patent claim 15, distinguished by the fact that the planetary gears mounted on the output shaft do not have crown gears, the sun gear shaft of the different gears having a disk brake for gear selection. At the front of the output shaft there is a sleeve which allows for reverse gear to be selected.

**20.** Gear box as in previous patent claims, distinguished by the fact that the variable flow hydraulic pump can be activated directly by the thermal engine of the vehicle instead of by a component of the planetary gear as is the case in patent claims 3, 4, 5, 6, 7, 8, 9, 10, 11, 12, 13 and 14.

**21.** Gear box as in previous patent claims, distinguished by the fact that it includes levers which activate the cylinder capacity variation levers for the pump and hydraulic motor.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

**FIG. 22**

**FIG. 23**

## FIG. 24

## FIG. 25

## FIG. 26

## FIG. 27

## FIG. 28

FIG. 29

FIG. 30

## FIG. 31

## FIG. 32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 059 055  (PARRAGA GARCIA)<br>* the whole document * | 1-3,6,15,<br>21,8,10,<br>16-20 | F 16 H 47/04 |
| X,Y | EP-A-0 143 365  (F.TACKE)<br>* the whole document * | 1-4,16-18 | |
| X | EP-A-0 151 946  (SCHWEIZERISCHE LOKOMOTIV- UND MASCHINENFABRIK)<br>* abstract; figure 1 * | 1,2,7 | |
| X | DE-A-2 141 098  (F. JARCHOW)<br>* figure 3 * | 1,2,11 | |
| X,Y | FR-A-2 373 000  (THYSSEN INDUSTRIE A.G.)<br>* the whole document * | 1,2,12,19 | |
| X | FR-A-2 387 388  (ZAHNRADFABRIEK FRIEDRICH-SHAFEN)<br>* figure 1 * | 1,2,13 | |
| Y | EP-A-0 003 397  (GENERAL ELECTRIC COMPANY)<br>* abstract; figure 1 * | 8,20 | TECHNICAL FIELDS SEARCHED (Int. Cl.5)<br><br>F 16 H |
| Y | DE-A-2 854 375  (ZAHNRADFABRIEK FRIEDRICHSHAFEN A.G.)<br>* the whole document * | 10 | |
| A | GB-A-2 049 843  (ZAHNRADFABRIEK FRIEDRICHSHAFEN A.G.)<br>* abstract; figure 1 * | 9 | |

–/–

The present search report has been drawn up for all claims

| Place of search | Date of completion of search | Examiner |
|---|---|---|
| The Hague | 08 October 91 | VINGERHOETS A.J.L. |

**European Patent Office**

# EUROPEAN SEARCH REPORT

Application Number

**EP 90 50 0112**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 412 760  (ZAHNRADFABRIEK FRIEDRICHSHAFEN A.G.)<br>* figure 2 *<br>– – – | 14 | |
| A | GB-A-362 999  (F.H.WRIGHT)<br>* the whole document *<br>– – – – – | 9,14 | |
| | | | TECHNICAL FIELDS SEARCHED (Int. Cl.5) |

The present search report has been drawn up for all claims

| Place of search | Date of completion of search | Examiner |
|---|---|---|
| The Hague | 08 October 91 | VINGERHOETS A.J.L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document